# EUROPEAN PATENT APPLICATION

(11) **EP 4 837 422 A1**
(43) Date of publication of application: **11.11.2026**
(21) Application number: 26177019.2
(22) Date of filing: 06.05.2026
(51) Int. Cl.: A22C 25/08, A22B 3/06, A22B 3/08, A22C 29/00, A22C 29/02

(54) **SEAFOOD HANDLING SYSTEM AND RELATED METHOD**

(30) Priority: 06.05.2025 GB 202506887
(71) Applicant: Polar Systems Limited, King's Lynn, Norfolk PE30 4LA (GB)
(72) Inventor: GAMBLE, Ashley, King's Lynn, PE30 4LA (GB)
(74) Representative: ip21 Ltd

(57) **Abstract**

A seafood handling system comprises a grading unit configured to determine one or more dimensional characteristics of incoming seafood products; means for diverting seafood products which do not meet a predetermined level of the dimensional characteristics; and means for applying an electrical discharge for seafood products which meet a predetermined level of the dimensional characteristics and for conveying seafood products towards a further station for further processing.

## Description

### TECHNICAL FIELD

The embodiments of the invention relate to seafood handling system and methods.

### BACKGROUND

Traditional seafood processing systems rely on mechanical separation and manual or blunt-force methods to process small seafood products such as langoustines. These methods are often inconsistent, inhumane, or inefficient, particularly when the product is found to be undersized and not suitable for tailing or packaging.

### SUMMARY

In a first broad independent aspect, the invention provides a seafood handling system comprising a grading unit configured to determine one or more dimensional characteristics of incoming seafood products; means for diverting seafood products which do not meet a predetermined level of the dimensional characteristics; and means for applying an electrical discharge for seafood products which meet a predetermined level of the dimensional characteristics and for conveying seafood products towards a further station for further processing. This system is particularly advantageous as it maximises the efficiency of the processing of recently caught seafood products whilst minimising waste.

In a subsidiary aspect, the invention provides the means for applying an electrical discharge comprises a stunner bath configured to hold a conductive medium, and a plurality of electrodes positioned within said bath and configured to be connected to a voltage source to generate an electric field within the conductive medium.

In a subsidiary aspect in accordance with the first broad independent aspect, the means for applying an electrical discharge comprise an electrically active roller assembly with one or more rollers which include at least one roller portion having an electrically conductive surface configured to be electrically coupled to a voltage source such that seafood products in contact therewith or in sufficient proximity therewith receive an electrical shock. This configuration is particularly advantageous as it allows efficient transport with efficient stunning of seafood products.

In further subsidiary aspect, at least one of said rollers has a portion with an electrically conductive surface and another portion which is a non-conductive portion. This configuration allows the stunning discharge to be localised for improve efficiency whilst also improving the safety of the station as it minimises the area where the discharge takes place.

In a further subsidiary aspect, at least one of said rollers has non-conductive portions upstream and downstream from the electrically conductive surface. This configuration further improves the efficiency of the stunning operation whilst further improving the safety of the operation.

In further subsidiary aspect, the or each rollers has a protruding rib which extends around the roller and which is configured to displace seafood products as the roller is rotated. This configuration is particularly advantageous in terms of improving the displacement of the seafood products whilst providing a particularly compact and efficient configuration.

In a further subsidiary aspect, the system further comprises a protective guard formed from a non-conductive material and configured to cover portions of the electrically conductive roller. This further improves the safety of the station.

In a further subsidiary aspect, the grading unit comprises a sensor-based grading mechanism or a camera to capture images of incoming seafood products for determining a size characteristic such as the length of the seafood product. This configuration allows for high volumes of throughput for efficient process of seafood products.

In a further subsidiary aspect, the means for diverting comprises a mechanical actuator configured to divert seafood products that fail to meet a predetermined size criterion from the processing path. This is particularly advantageous to separate out a portion of the seafood which may be returned to its environment rapidly thus minimizing wastage.

In further broad independent aspect, the invention provides a method of handling seafood products, comprising the steps of grading the seafood products to determine one or more dimensional characteristics of incoming seafood products; diverting seafood products which do not meet a predetermined level of the dimensional characteristics; and applying an electrical discharge for seafood products which meet a predetermined level of the dimensional characteristics and conveying seafood products towards a further station for further processing.

In a further subsidiary, the method comprises the step of applying an electrical discharge from an electrically active roller assembly with one or more rollers which include at least one roller portion having an electrically conductive surface configured to be electrically coupled to a voltage source such that seafood products in contact therewith or in sufficient proximity therewith receive an electrical shock.

In a further subsidiary aspect, the method provides at least one of said rollers has a portion with an electrically conductive surface and another portion which is a non-conductive portion.

In a further subsidiary aspect, the method provides at least one of said rollers has non-conductive portions upstream and downstream from the electrically conductive surface.

In a further subsidiary aspect, the or each rollers, as provided by the method, has a protruding rib which extends around the roller and which is configured to displace seafood products as the roller is rotated.

In a further subsidiary aspect, the method comprises the further step of providing a protective guard formed from a non-conductive material and configured to cover portions of the electrically conductive roller.

In a further subsidiary aspect, the method comprises the further step of capturing images of incoming seafood products for determining a size characteristic such as the length of the seafood product.

In accordance with further embodiments, an electrified roller-based seafood grading and stunning system is provided for processing seafood products. The system optionally includes a set of rotating rollers, at least one of which is electrically charged to deliver a controlled stunning voltage to the seafood. The rollers advance the product along until it hits the exposed metal bits of the roller for stunning.

In one embodiment, a roller with an electrically conductive surface is electrically coupled to a voltage source that supplies a controlled electrical voltage sufficient to stun seafood products during transport, wherein the conductive surface extends along a substantial portion of the roller's circumference so that seafood products contacting the surface receive a controlled electrical shock. This continuous rotational contact ensures that the electrical current is delivered consistently and uniformly, thereby disrupting neural signaling in the seafood to achieve a rapid and humane stun. In preferred embodiments, the system can also include a grading mechanism with upstream sensors to divert undersized animals from the stunner unit for humane processing and potential release, a diversion assembly configured to redirect seafood products deemed undersized away from the primary processing path, at least a pair of non-conductive rollers arranged upstream and downstream of the electrically active roller assembly to further guide the products into and out of the stunning zone, a removable protective guard fabricated from non-conductive material to cover portions of the roller assembly to restrict access to live electrical components, and a voltage control unit to supply a regulated voltage.

In a further broad independent aspect, the invention provides a system for electrified roller-based seafood stunning, the system comprising an electrically active roller assembly including at least one roller having an electrically conductive surface configured to be electrically coupled to a voltage source, the conductive surface extending along a substantial portion of the roller circumference such that seafood products in contact therewith receive an electrical shock, at least a pair of non-conductive rollers, one arranged upstream and one arranged downstream of the electrically active roller assembly, the upstream roller guiding seafood products into engagement with the electrically conductive surface whilst the downstream roller conveys seafood products away from the electrically active roller assembly, and a protective guard formed from a non-conductive material and configured to cover portions of the electrically active roller assembly to restrict access to live electrical components; wherein the system is configured to convey seafood products along a processing path and to apply a controlled electrical stun during continuous rotational contact with the electrically conductive surface. This configuration is particularly advantageous as it combines transport and humane stunning into a single, compact system, ensuring all seafood receives a consistent and effective electrical stun whilst being displaced. The rotating rollers naturally align the seafood for optimal contact, since unlike systems with static surfaces (e.g., flat beds), the rolling motion gently spreads and positions each specimen, thereby improving contact uniformity and ensuring that all seafood receive an equal and effective stunning dose, while the protective guard ensures operator safety. This setup improves processing efficiency and supports compliance with welfare and safety standards.

In a further subsidiary aspect, the system further comprises a sensor-based grading mechanism, positioned upstream of the electrically active roller assembly and configured to sense dimensional characteristics of incoming seafood products and to generate a size signal.

In a further subsidiary aspect, the sensor-based grading mechanism comprises at least one optical sensor which may include a camera configured to capture images of the incoming seafood products and generate a corresponding size signal. This configuration is particularly advantageous because the use of an optical sensor to capture images and generate a corresponding size signal enables accurate, real-time grading of incoming seafood products based on visual characteristics. It allows for non-contact measurement, reducing physical stress on the seafood, and ensures precise size-based sorting. This improves the efficiency of the overall processing system by directing only appropriately sized products to subsequent stages, supporting both quality control and compliance with size regulations.

In a further subsidiary aspect, the system further comprises a diversion assembly operatively connected with the sensor-based grading mechanism and configured to redirect seafood products that do not meet a predetermined size criterion away from the processing path leading to the electrically active roller assembly.

In a further subsidiary aspect, the diversion assembly comprises a mechanical actuator configured to divert seafood products that fail to meet the predetermined size criterion from the processing path. This configuration is particularly advantageous because the mechanical actuator enables automatic and precise redirection of seafood products that do not meet the predetermined size criterion. By actively diverting unsuitable products from the main processing path, the system reduces manual sorting, improves throughput, and ensures that only properly sized seafood reaches the stunning or tailing stages. This enhances operational efficiency, supports consistent product quality, and enables compliance with regulatory and sustainability standards.

In a further subsidiary aspect, the system further comprises a voltage control unit electrically connected to the voltage source and configured to maintain a substantially constant stun-inducing voltage during operation.

In a further subsidiary aspect the voltage source is configured to supply a controlled electrical voltage to the electrically active roller assembly sufficient for stunning seafood, optionally in the range of 100 to 300 volts, using a voltage control unit configured to receive feedback from the roller assembly. This configuration is particularly advantageous for ensuring a stable and consistent electrical output by monitoring feedback from the electrified roller assembly and maintaining the applied voltage. This stability is critical for delivering a reliable and humane stunning effect, regardless of variations in load or contact conditions. It enhances the safety, efficiency, and repeatability of the stunning process while minimizing the risk of over- or understunning.

In a further subsidiary aspect, the protective guard is removably secured to allow maintenance access to the electrically active roller assembly. This configuration is advantageous for minimizing operational downtime, supporting hygiene compliance in seafood processing environments, and enabling quick servicing whilst maintaining safety during normal operation by restricting access to live electrical components.

In a further subsidiary aspect, the non-conductive rollers (upstream and downstream) are fabricated from injection-moulded polypropylene. This configuration is particularly advantageous for providing a durable, lightweight, and chemically resistant material ideal for seafood processing environments. Polypropylene's non-conductive properties enhance electrical safety by isolating the electrified roller section, whilst its smooth surface and high wear resistance support hygienic handling, easy cleaning, and long-term operational reliability.

In a further subsidiary aspect, the sensor-based grading mechanism and the diversion assembly operate in coordination to enable real-time classification and sorting of seafood products before electrical stunning.

In a further broad independent aspect, the invention provides a method of processing seafood comprising the steps of conveying seafood products on a roller conveyor system that includes an electrically active roller assembly having an electrically conductive surface connected to a voltage source supplying a controlled electrical voltage sufficient to stun seafood products during transport, contacting seafood products with the electrically conductive surface of the electrically active roller assembly so that an electrical shock is imparted to the seafood products through continuous rotational contact, and transferring the seafood products from the electrically active roller assembly to a downstream non-conductive roller;
wherein the steps are performed such that electrical stunning of the seafood products is effected in a continuous process.

In a subsidiary aspect, the invention provides a step of applying an electrical discharge comprises conveying the seafood products which meet the predetermined level of the dimensional characteristics into a stunner bath containing a conductive medium, and generating an electric field within said medium to impart an electrical shock to the seafood products.

In a further subsidiary aspect, the method further comprises the step of sensing a dimension of each seafood product using one or more optical or sensor-based grading mechanisms positioned upstream of the electrically active roller assembly.

In a further subsidiary aspect, the method further comprises the step of generating a signal indicative of the dimension of each seafood product based on captured image or sensor data.

In a further subsidiary aspect, the method further comprises the step of directing seafood products that do not meet a predetermined size criterion along a diversion path, which bypasses the electrically active roller assembly, by actuating a diversion assembly , which comprises a mechanical actuator, responsive to signals from the grading mechanisms.

In a further subsidiary aspect, the voltage source is configured to supply a controlled electrical voltage to the electrically active roller assembly sufficient for stunning seafood, optionally in the range of 100 to 300 volts, using a voltage control unit configured to receive feedback from the roller assembly.

In a further broad independent aspect, the invention provides a modular seafood handling system comprising:
a stunner unit configured to apply an electrical discharge to seafood products;
a conveyance means for transporting seafood products through the stunner unit; and
a mounting interface positioned upstream of the stunner unit, said mounting interface being configured for the removable attachment of a grading unit, wherein the grading unit is configured to determine one or more dimensional characteristics of incoming seafood products and to control a diversion unit.

### BRIEF DESCRIPTION OF THE FIGURES

FIG. 1 shows a perspective view of a roller stunner station.
FIG. 2 illustrates, in a block diagram, the components of a seafood grading and stunning system in accordance with certain embodiments.
FIG. 2A illustrates, in a block diagram, the 'Grading Unit' and its sub-components in accordance with certain embodiments.
FIG. 2B illustrates, in a block diagram, the 'Diversion Unit' and its sub-components in accordance with certain embodiments.

### DETAILED DESCRIPTION

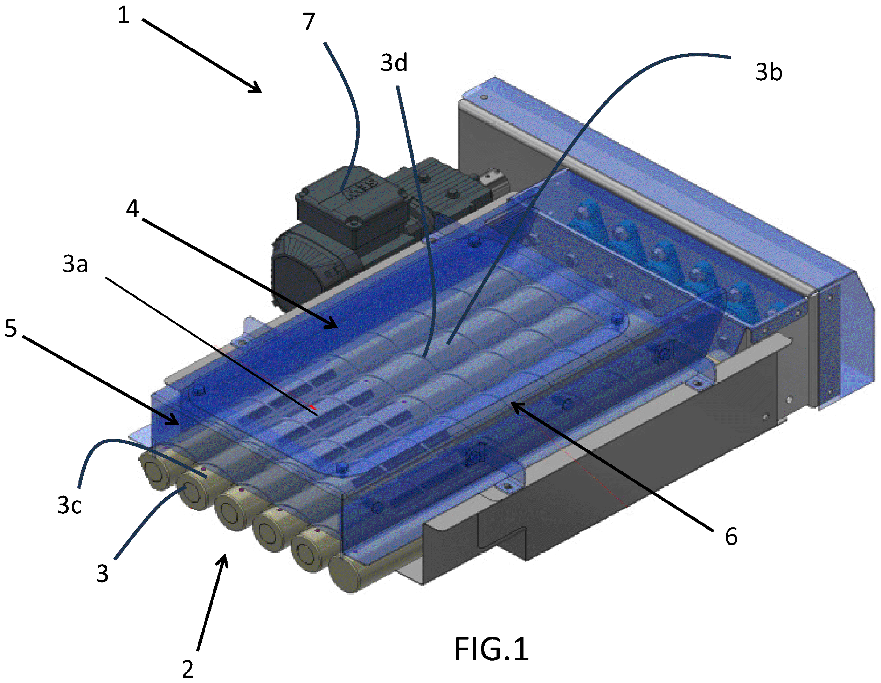

Figure 1 shows a roller stunner station 1 with an electrically active roller assembly generally referenced 2. The electrically active roller assembly incorporates a plurality of rollers such as roller 3 for guiding the products to a further processing station or release such as to be returned to sea. In alternative embodiments, the rollers may be replaced by a flat bed or other conveying system including for example a belt. In either the presently described roller system or in a flat bed system, an electrically conductive area is provided over which langoustines or other products are transported and stunned by the application of an appropriate electrical voltage.

In figure 1, roller 3 includes an electrically conductive surface 3a configured to be electrically coupled to a voltage source that supplies a controlled electrical voltage sufficient to stun seafood products. The electrically conductive surface 3a may be a conductive metallic surface such as stainless steel. An upstream non-conductive portion 3b of the roller 3 guides the seafood products into engagement with the electrically conductive surface 3a. The non-conductive portion may be formed as a plastics sheath enshrouding part of the roller. A downstream non-conductive portion 3c of the roller 3 guides the stunned seafood products to further processing. The downstream non-conductive portion 3c may likewise be formed as a plastics sheath enshrouding part of the roller. Each one of the rollers incorporates a helicoidal rib which extends in a spiral about the external surface of the roller. This configuration is particularly advantageous to drive the displacement of the product along the roller as the roller is rotated about its longitudinal axis. The rotation of the rollers may be driven by a motor 7 which converts electrical power into rotation which, in turn, may be transmitted to the collection of rollers of roller stunner station 1. The transmission may employ one or more belts or gears as appropriate. The rollers may be supported by a plurality of mounts provided in the roller stunner station. Each roller may thus be supported by bearing surfaces. One of the bearing surfaces may engage the electrically conducting surface in order to transmit current between the bearing surface and the electrically conducting surface. Alternatively, a conductor may be provided within the roller to transmit the current to the electrically conducting surface.

A protective guard 4, formed from a non-conductive material, is configured to cover portions of the electrically active roller assembly to restrict access to live electrical components. The roller stunner station 1 is configured to convey seafood products along a roller processing path 2 and to apply a controlled electrical discharge during continuous rotational contact with the electrically conductive surface of the rollers. The rotating rollers naturally align the seafood for optimal contact, thereby improving contact uniformity and ensuring that all seafood receives an equal and effective stunning discharge, whilst the protective guard 4 ensures operator safety.

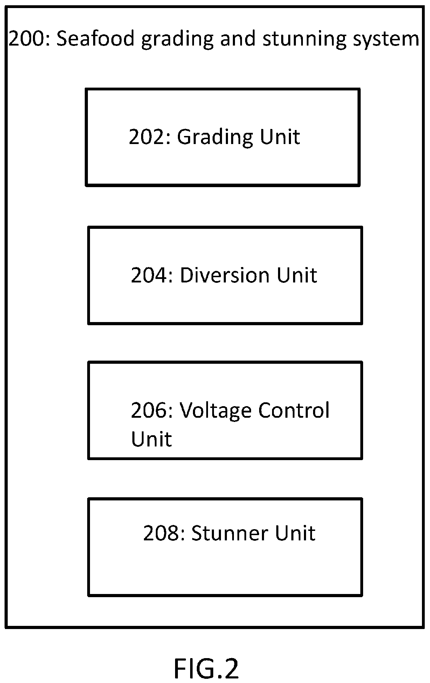

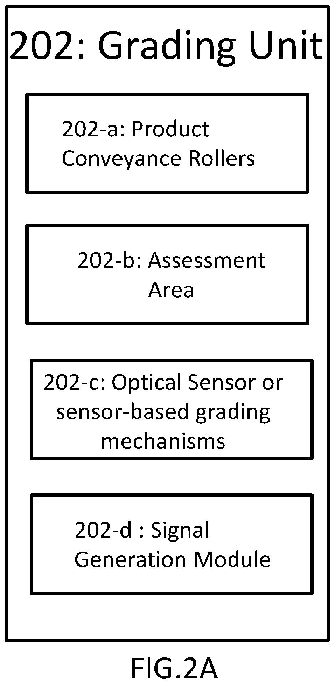

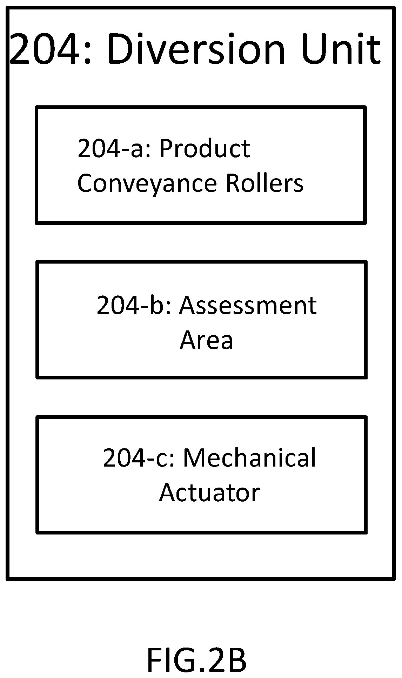

The Seafood Grading and Stunning System 200, as shown in Fig. 2, is configured to automate the handling, classification, and humane stunning of seafood products, particularly small crustaceans such as langoustines, prior to further processing or release. The system 200 comprises the Stunner Unit 208, which includes an electrically active roller assembly 2 which may be of the kind described with respect to figure 1 for delivering a controlled electrical shock to seafood products whilst the product is linearly displaced as rollers are rotated whilst in rotational contact. A Grading Unit 202 may be positioned upstream from the Stunner Unit 208, for capturing the physical characteristics of incoming seafood products (such as size or shape) and generating a signal indicative of each product's dimensions. A Diversion Unit 204 may be further provided and operatively connected to the Grading Unit 202, for actuating, upon receiving a signal indicating that a seafood product does not meet the predetermined size criterion, a mechanical redirection system (such as a gate, flap, or deflector) may be configured to divert the undersized seafood away from the main processing path that leads to the Stunner Unit 208, and the Voltage Control Unit 206 may be electrically connected to the Stunner Unit 208 and the system's voltage source, for regulating and stabilizing the electrical output applied to the electrically conductive roller surface.

The overall operation of the Seafood Grading and Stunning System 200 may be in one embodiment as follow:
1. Incoming seafood products enter the system 200 and are first evaluated by the Grading Unit 202, where their dimensions are measured.
2. Based on the measurements, the Grading Unit 202 sends a signal:
   - If the product meets the required size criterion, it continues on the main processing path toward the Stunner Unit 208.
   - If the product does not meet the criterion, it is diverted by the Diversion Unit 204 along an alternative path (e.g., for live release or separate handling).
3. Seafood products that proceed along the main path enter into contact with the conductive roller surface of the Stunner Unit 208. Here, they receive a controlled electrical shock that stuns them.
4. The Voltage Control Unit 206 continuously regulates the voltage applied at the Stunner Unit, ensuring consistent stunning performance across all products, regardless of load or minor variations.
5. After stunning, the products are conveyed onward for further mechanical processing (e.g., tailing, packaging, or freezing). In preferred embodiments, the produce exits the stunner unit onto further conveying means which assess the position for cutting the produce, for example, if the produce is a langoustine the next unit may incorporate a station for cutting the langoustine between head and tail.

The Grading Unit 202 within the Seafood Grading and Stunning System 200 is responsible for evaluating the physical characteristics of seafood products-particularly their size-before they proceed to stunning. As shown in Fig 2A, it consists of four main components that work together to capture, process, and interpret product information in real time. The Product Conveyance Rollers 202-a or other such conveyors such as a flatbed conveyor or a roller conveyor form a part of the transport mechanism, ensuring smooth and controlled movement of seafood products through the grading station. Its primary function is therefore to move seafood products through the optical, camera, or sensor-based evaluation area at a consistent speed and orientation, enabling accurate data capture by the sensors. The Assessment Area 202-b is the physical zone within the grading unit where the seafood products are evaluated by the sensors. It allows to define a controlled environment in which products are assessed for size or other physical characteristics, ensuring accuracy and consistency in the grading process. The Optical Sensor or Sensor-Based Grading Mechanism 202-c are imaging devices which may include cameras or other non-contact sensors positioned to scan incoming seafood products. They capture data such as size, shape, or other dimensional parameters critical to determining whether a product meets a predetermined criterion. The Signal Generation Module 202-d processes the data captured by the sensors to determine the classification of each seafood product (e.g., meets or does not meet size requirements). It generates a digital or electronic signal based on this analysis. Its primary function consists in converting data into a size signal that can be used to control downstream processing actions, such as diversion or continuation toward stunning.

The overall operation of the Grading Unit 202 is as follow:
1. Seafood products are conveyed via the Product Conveyance Rollers or other such conveyors into the Assessment Area.
2. Within the Assessment Area, Optical Sensors or Sensor-Based Grading Mechanisms scan each product and capture dimensional data. Other criteria may also be measured in the assessment area as appropriate.
3. The captured data is transmitted to the Signal Generation Module, where it is processed into a size signal indicating whether the product satisfies the required grading criteria.
4. This size signal is then used to control subsequent steps-such as allowing the product to proceed to the stunner or diverting it for live release via a diversion unit.

The Diversion Unit 204 within the Seafood Grading and Stunning System 200 is responsible for selectively diverting seafood products that do not meet predefined grading criteria away from the main processing path, ensuring that only qualified products proceed to stunning and further processing. As shown in Figure 2B, it consists of three main components working together in a coordinated manner. The Product Conveyance Rollers 204-a guides seafood products through the diversion area at a controlled speed and orientation, ensuring smooth movement regardless of whether the product is being diverted or continuing along the main path. The Assessment Area 204-b defines the zone where the decision to divert or not divert a seafood product is executed in order to ensure that the diversion operation is carried out precisely based on the product's evaluated dimensions or classification status. The Mechanical Actuator 204-c is the active device that physically redirects seafood products away from the main processing path when instructed. Its primary function is to move a gate, flap, pusher, or similar mechanism to divert undersized or non-compliant seafood products based on grading signals in order to enabling rapid and precise sorting without interrupting the main processing flow.

The overall operation of the Diversion Unit 204 is as follow:
1. Seafood products are conveyed via the Product Conveyance Rollers into the Assessment Area.
2. Within the Assessment Area, products are monitored, and if a grading signal indicates that a product does not meet the predetermined size criterion, the Mechanical Actuator is triggered.
3. The Mechanical Actuator physically redirects the seafood product along an alternative diversion path, away from the main line leading toward the stunner.
4. Products that meet the required criteria continue unobstructed along the primary processing path.

In the preceding embodiments, the langoustine or such products which have been stunned may be conveyed to a further processing unit which may include a tailing station in which the tails are separated from the head by cutting along a cut line.

In further alternative embodiments of the invention, the configuration of the seafood handling system may be adapted for different operational requirements and processing environments. These embodiments provide for modularity and alternative stunning mechanisms while retaining the core principles of humane and efficient seafood processing.

In one such alternative embodiment, the system is designed with a modular configuration. The grading unit (202), as described with reference to FIG. 2 and FIG. 2A, may be configured as an optional module that can be mounted directly onto the main apparatus which houses the stunner unit (208). This modularity allows for a flexible system where some machines are equipped for the dual function of simultaneous grading and electrocution, while others perform only the stunning function. For machines configured without the grading module, seafood products can be introduced directly into the stunner unit (208), for example, by being poured from a bucket or fed from a simple conveyor. This configuration is particularly suited for bulk processing where products have been pre-sorted or where size-based grading is not required for the intended processing.

In another alternative embodiment, the means for applying an electrical discharge may take a different form from the roller-based system. The stunner unit (208) may comprise a stunner bath. Such a bath would consist of a tank or container designed to hold a conductive medium, for instance, water or a saline solution. A plurality of electrodes would be positioned within the bath, connected to a voltage source, and controlled by the voltage control unit (206) to generate a controlled electric field throughout the conductive medium.

When this stunner bath is integrated with the grading functionality, the system provides a comprehensive solution for selective processing. The grading unit (202) assesses the dimensional characteristics of the incoming seafood, such as langoustines. Based on this assessment: Langoustines that are graded to be killed, i.e., those that meet a pre-determined criterion such as a specific size range, are conveyed and directed into the stunner bath. Upon immersion, they are subjected to the electric field, which induces a rapid and humane stun or death, preparing them for further processing.

Langoustines that fail to meet the pre-determined criterion are identified by the grading unit (202). A signal is sent to the diversion unit (204), which actuates a mechanism to redirect these langoustines away from the path leading to the stunner bath. These diverted langoustines may be channelled onto a separate conveyor or chute to be returned live to their environment, such as the sea. This process supports sustainable practices by ensuring that undersized or nontarget catch can be released unharmed.

This embodiment, combining a grading unit with a stunner bath and a diversion mechanism, therefore allows for the efficient and humane processing of correctly sized seafood while enabling the conservation of stock that does not meet the criteria for processing.

The diversion mechanism in a preferred embodiment may include a series of rollers for conveying the langoustines or other appropriate seafood towards the stunning station. Adjacent rollers can be sufficiently spaced apart to only convey the langoustines that are above a certain pre-determined height and let the smaller langoustines fall out or through the gap provided between rollers so that they may be returned to the sea or processed differently as appropriate. In the first embodiment presented in this description, the rollers can thus do the sorting (grading), conveying and stunning from a single roller station. In the latter embodiment, the rollers may provide the sorting and conveying towards the stunning station which may be in the form of a bath with electrically conductive fluid contained therein; whereby only the langoustines of a certain predetermined size are stunned whilst the langoustines below said size are returned to the sea.

## Claims

1. A seafood handling system comprising a grading unit configured to determine one or more dimensional characteristics of incoming seafood products; means for diverting seafood products which do not meet a predetermined level of the dimensional characteristics; and means for applying an electrical discharge for seafood products which meet a predetermined level of the dimensional characteristics and for conveying seafood products towards a further station for further processing.

2. The system of claim 1, wherein the means for applying an electrical discharge comprises a stunner bath configured to hold a conductive medium, and a plurality of electrodes positioned within said bath and configured to be connected to a voltage source to generate an electric field within the conductive medium.

3. The system of either claim 1 or claim 2, wherein the means for diverting seafood products comprise a plurality of adjacent rollers with a space between them allowing seafood products of a certain size to fall there through and for seafood products above a certain size to be conveyed to said means for applying an electrical discharge.

4. The system of claim 1, wherein the means for applying an electrical discharge comprise an electrically active roller assembly with one or more rollers which include at least one roller portion having an electrically conductive surface configured to be electrically coupled to a voltage source such that seafood products in contact therewith or in sufficient proximity therewith receive an electrical shock.

5. The system of claim 4, wherein at least one of said rollers has a portion with an electrically conductive surface and another portion which is a non-conductive portion.

6. The system of claim 5, wherein at least one of said rollers has non-conductive portions upstream and downstream from the electrically conductive surface.

7. The system of any of the preceding claims, wherein the or each rollers has a protruding rib which extends around the roller and which is configured to displace seafood products as the roller is rotated.

8. The system of any of the preceding claims, further comprising a protective guard formed from a non-conductive material and configured to cover portions of the electrically conductive roller.

9. The system according to any one of the preceding claims, wherein the grading unit comprises a sensor-based grading mechanism or a camera to capture images of incoming seafood products for determining a size characteristic such as the length of the seafood product.

10. The system according to any one of the preceding claims, wherein the means for diverting comprises a mechanical actuator configured to divert seafood products that fail to meet a predetermined size criterion from the processing path.

11. A method of handling seafood products, comprising the steps of grading the seafood products to determine one or more dimensional characteristics of incoming seafood products; diverting seafood products which do not meet a predetermined level of the dimensional characteristics; and applying an electrical discharge for seafood products which meet a predetermined level of the dimensional characteristics and conveying seafood products towards a further station for further processing.

12. The method of claim 11, wherein the step of applying an electrical discharge comprises conveying the seafood products which meet the predetermined level of the dimensional characteristics into a stunner bath containing a conductive medium, and generating an electric field within said medium to impart an electrical shock to the seafood products.

13. The method of claim 11, comprising the step of applying an electrical discharge from an electrically active roller assembly with one or more rollers which include at least one roller portion having an electrically conductive surface configured to be electrically coupled to a voltage source such that seafood products in contact therewith or in sufficient proximity therewith receive an electrical shock.

14. The method of claim 13, wherein at least one of said rollers has a portion with an electrically conductive surface and another portion which is a non-conductive portion.

15. The method of claim 14, wherein at least one of said rollers has non-conductive portions upstream and downstream from the electrically conductive surface.

16. The method of any one of claims 10 to 15, wherein the or each rollers has a protruding rib which extends around the roller and which is configured to displace seafood products as the roller is rotated.

17. The method of any one of claims 10 to 16, comprising the further step of providing a protective guard formed from a non-conductive material and configured to cover portions of the electrically conductive roller.

18. The method of any one of claims 10 to 17, comprising the further step of capturing images of incoming seafood products for determining a size characteristic such as the length of the seafood product.

19. A modular seafood handling system comprising:
a stunner unit configured to apply an electrical discharge to seafood products;
a conveyance means for transporting seafood products through the stunner unit; and
a mounting interface positioned upstream of the stunner unit, said mounting interface being configured for the removable attachment of a grading unit, wherein the grading unit is configured to determine one or more dimensional characteristics of incoming seafood products and to control a diversion unit.
